# EUROPÄISCHE PATENTSCHRIFT

(11) **EP 0 891 274 B1**
(45) Veröffentlichungstag und Bekanntmachung des Hinweises auf die Patenterteilung: **23.10.2002**
(21) Anmeldenummer: 97919306.7
(22) Anmeldetag: 27.03.1997
(51) Int. Cl.: B60T 8/26, B60T 8/88

(54) **BREMSANLAGE MIT ELEKTRONISCHER BREMSKRAFTVERTEILUNG**
BRAKING SYSTEM WITH ELECTRONIC BRAKING FORCE DISTRIBUTION
SYSTEME DE FREINAGE A REPARTITION ELECTRONIQUE DE LA FORCE DE FREINAGE

(30) Priorität: 13.04.1996 DE 19614630
(43) Veröffentlichungstag der Anmeldung: 20.01.1999
(73) Patentinhaber: Continental Teves AG & Co. oHG, 60488 Frankfurt (DE)
(72) Erfinder: PRÖGER, Thomas, D-63322 Rödermark (DE); ZENZEN, Markus, D-65795 Hattersheim (DE)
(74) Vertreter: Blum, Klaus-Dieter, Dipl.-Ing.
(86) Internationale Anmeldenummer: EP9701578
(87) Internationale Veröffentlichungsnummer: WO97038882

(56) Entgegenhaltungen:
- WO-A-90/11916
- DE-A- 2 215 608
- DE-A- 2 722 435
- DE-A- 19 501 760

## Beschreibung

Die vorliegende Erfindung betrifft eine Bremsanlage mit elektronischer Bremskraftverteilung gemäß dem Oberbegriff des Anspruchs 1.

Eine derartige Bremsanlage ist beispielsweise aus der DE 43 37 498 A1 bekannt. Die bekannte Bremsanlage regelt die am Hinterrad angelegte Bremskraft in einer Beziehung zu der am Vorderrad angelegten Bremskraft, um eine ideale Bremskraftverteilung zu gewährleisten. Druckregelventile sind in einem hydraulischen Kreis angeordnet, der den Hauptzylinder der Bremsanlage mit den Hinterradbremsen verbindet. Vorgesehen ist eine Hilfsleistungsquelle zur Abgabe eines Leistungsdruckes und ein hydraulischer Verstärker zur Regulierung des Bremsdruckes und zur Betätigung des Hauptzylinders. Zwischen dem Hauptzylinder und den Regelventilen ist ein Umschaltventil angeordnet und wahlweise in eine erste Betriebsstellung bringbar zur Verbindung der Regelventile mit dem Hauptzylinder und zur Sperrung der Verbindung zwischen den Regelventilen und dem hydraulischen Verstärker sowie in eine zweite Betriebsstellung zur Verbindung der Regelventile mit dem hydraulischen Verstärker und zur Sperrung der Verbindung zwischen den Regelventilen und dem Hauptzylinder. Wenn das Umschaltventil von der ersten Betriebsstellung in die zweite Betriebsstellung versetzt wird, dann regeln die Regelventile den hydraulischen Druck in den Hinterradzylindern entsprechend der vorgegebenen Beziehung zum Vorderradbremsdruck. Der Eintritt in diese Regelung ist abhängig davon, ob eine bestimmte Startbedingung erfüllt ist oder nicht. Dabei müssen bestimmte Kriterien gegeben sein: Der Bremslichtschalter muß eingeschaltet sein, die Fahrzeuggeschwindigkeit muß einen bestimmten Schwellenwert überschritten und die Fahrzeugbeschleunigung einen bestimmten negativen Schwellenwert unterschritten haben, und schließlich muß die Radgeschwindigkeit des Hinterrades, dessen Bremsdruck geregelt werden soll, die Radgeschwindigkeit des vor ihm liegenden Vorderrades um einen bestimmten Betrag unterschreiten. Sind diese Bedingungen erfüllt, setzt die elektronische Bremskraftverteilung ein. Sie wird dann abgebrochen, wenn entweder der Bremslichtschalter ausgeschaltet wird, was bedeutet, daß der Fahrer den Fuß vom Bremspedal genommen hat, oder wenn die Fahrzeugbeschleunigung einen bestimmten negativen Schwellenwert, der nicht identisch sein muß mit dem der Startbedingungen, überschreitet.

Aus der DE 27 22 435 A1 ist eine Sicherheitsschaltung für eine blockiergeschützte (ABV-Funktion) und lastabhängige (ALB-Funktion) Bremsanlage bekannt, die Überwachungsschaltungen zum Erkennen und Signalisieren unzulässig lang eingeschalteter Ventilmagnete enthält. Nun sind die Ventil-Einschaltzeiten bei einer ALB-Funktion regelmäßig länger als bei einer ABV-Funktion. Es werden besondere Maßnahmen beschrieben, die sicherstellen, daß bei der Überwachung der Bremsanlage die langen Einschaltsignale, die bei der ALB-Funktion "normal" sind, nicht als Fehler bewertet werden.

Eine elektronische Bremskraftverteilung sollte immer nur dann erfolgen, wenn sie erforderlich ist. Sicherlich ist daher ein Austrittskriterium, welches unabhängig von der Stellung des Bremslichtschalters ist, eine sinnvolle Ergänzung. Allerdings ist die Berechnung einer Fahrzeugbeschleunigung bei sehr geringen Radgeschwindigkeiten sehr fehlerbehaftet, da die Radsensoren bei niedrigen Geschwindigkeiten keine exakten Werte über die Fahrzeuggeschwindigkeit abgeben. Außerdem gibt es Bremsanlagen, deren Startbedingungen für den Eintritt in eine elektronische Bremskraftverteilung unabhängig davon sind, ob eine pedalbetätigte Bremsung vorliegt oder nicht. Unter Umständen erfolgt also dann ein Eintritt in die elektronische Bremskraftverteilung beim Durchfahren eines Schlagloches oder einer anderen Fahrbahnstörung, welche sich auf eine Einzelradgeschwindigkeit ausgewirkt hat. Schließlich ist es noch denkbar, daß ein defekter Bremslichtschalter nicht erkannt wird oder aber aufgrund eines defekten Bremslichtschalters nicht erkannt wird, daß der Fahrer eine pedalbetätigte Bremsung bereits beendet hat.

Um auch in solchen Fällen einen Austritt aus der elektronischen Bremskraftverteilung zu bewirken und eine unnötige Ventilbetätigung zu vermeiden, liegt der vorliegenden Erfindung die Aufgabe zugrunde, eine Bremsanlage der eingangs genannten Art zu schaffen, welche einen Austritt aus der elektronischen Bremskraftverteilung unabhängig von der Betätigung des Bremspedals und unabhängig vom Überschreiten einer bestimmten Fahrzeugbeschleunigung veranlaßt, wenn eine Druckminderung an den Hinterachsbremsen nicht erforderlich ist.

Diese Aufgabe wird gelöst in Verbindung mit den kennzeichnenden Merkmalen des Anspruchs 1. Das Prinzip der Erfindung liegt darin, zu erkennen, daß der Fahrer trotz andauernder Bremsung nicht die Absicht verfolgt, stark zu verzögern. Wenn eine Bremssituation, bei welcher an der Hinterachse weder eine Bremsdruckabsenkung noch ein Konstanthalten des Bremsdrucks erforderlich ist, sondern im Gegenteil ohne weiteres noch ein größeres Bremsmoment aufgebracht werden könnte, länger als beispielsweise 7 Sekunden andauert, kann man von dieser Annahme ausgehen.

Dabei kann parallel auch eine zweite Bedingung wirksam sein, wobei dann die elektronische Bremskraftverteilung jeweils dann abgebrochen wird, wenn eine der beiden Bedingungen erfüllt ist. Diese zweite Bedingung kann dann durchaus das Überschreiten einer bestimmten negativen Fahrzeugbeschleunigung sein.

Parallel zu dieser zweiten Bedingung oder zusätzlich kann überprüft werden, ob weiterhin eine pedalbetätigte Bremsung vorliegt. Da das Erkennen einer pedalbetätigten Bremsung von der Stellung eines Bremslichtschalters abhängig ist, empfiehlt es sich, eine Bremslichtschalterfehlererkennung in die Bremsanlage zu integrieren, damit nicht ein defekter Bremslichtschalter zu einer vorzeitigen Beendigung der elektronischen Bremskraftverteilung führt.

Eine nähere Erläuterung des Erfindungsgedankens erfolgt nun anhand der Beschreibung eines Ausführungsbeispiels in einer Figur.

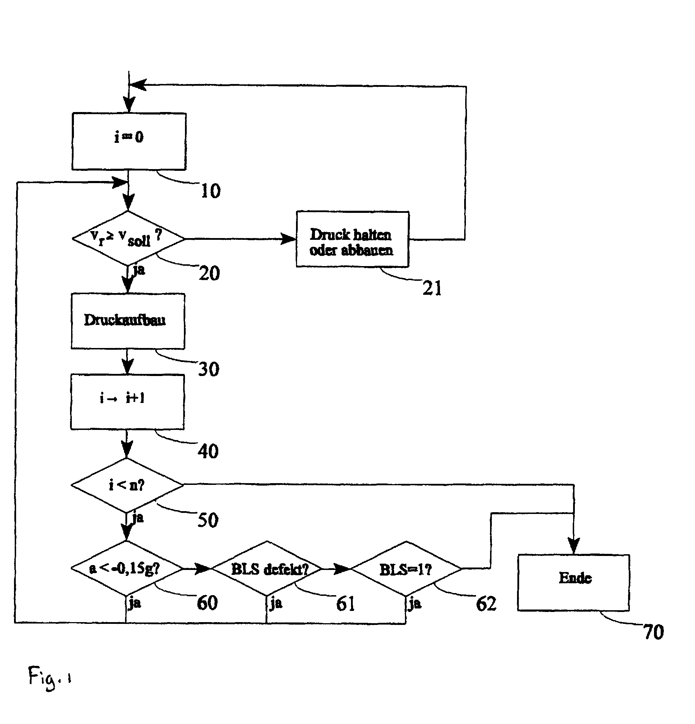

Die einzige Figur zeigt ein Flußdiagramm über die einzelnen Schritte bei der Abfrage der Austrittskriterien aus der elektronischen Bremskraftverteilung.

Zunächst wird in Schritt 10 ein Zähler auf 0 gesetzt, sofern dies nicht schon an anderer Stelle erfolgt ist, um eine Zeitmessung zu ermöglichen. Im vorliegenden Fiußdiagramm wird eine Zeitmessung also durch Zählung der Durchläufe, der sogenannten "Loops" vorgenommen. Andere Möglichkeiten zu einer Zeitmessung sind beispielsweise durch das Abzählen von Ventilschaltimpulsen gegeben. In Schritt 20 wird abgefragt, ob die Radgeschwindigkeiten vᵣ der Hinterräder größer sind als eine vorgeschriebene Sollgeschwindigkeit Vₛₒₗₗ. Die Sollgeschwindigkeit kann beispielsweise aus der Radgeschwindigkeit des vor dem betroffenen Hinterrad liegenden Vorderrades abgeleitet werden, wobei eine bestimmte Abweichung erlaubt sein kann.

Ist die Hinterradgeschwindigkeit vᵣ kleiner als die Sollgeschwindigkeit vₛₒₗₗ, so ist eine Druckhaltephase oder eine Druckabbauphase gemäß Schritt 21 einzuleiten, deren genauer Ablauf nicht Gegenstand der vorliegenden Erfindung ist und daher auch nicht näher beschrieben werden soll.

Für den Fall jedoch, daß die Hinterradgeschwindigkeit eine Sollgeschwindigkeit erreicht hat oder überschreitet, wird in Schritt 30 ein Bremsdruckaufbau vorgenommen.

In Schritt 40 wird sodann der Zähler i, welcher die Anzahl der Durchläufe durch die Druckaufbauphase bezeichnet, um 1 erhöht.

Anschließend wird in Schritt 50 abgefragt, wie lange dieser Zustand der Druckaufbauphase schon andauert. Hierzu wird der Zähler i mit einer festen Zahl n verglichen, welche eine bestimmte Echtzeit repräsentiert.

Ist die Zahl n von Durchläufen erreicht, so schaltet sich die elektronische Bremskraftverteilung ab, was in Schritt 70 mit Ende bezeichnet ist. Dies erfolgt unabhängig davon, wie weit die Hinterradgeschwindigkeit vᵣ ihren Sollwert vₛₒₗₗ überschreitet.

Ist jedoch die Zahl i der Durchläufe noch kleiner als die Zahl n, so wird bei dieser Ausführung der Erfindung ein anderes Abbruchkriterium in Schritt 60 bis 62 abgefragt. In einer einfacheren Ausführung entfallen die Schritte 60 bis 62 oder werden durch andere Kriterien ersetzt.

In diesem Ausführungsbeispiel sind die Schritte 60,61 und 62 durch eine Und-Verknüpfung aneinandergereiht, so daß nur bei Erfüllung aller Kriterien ein Ausstieg aus der elektronischen Bremskraftverteilung in Schritt 70 erfolgen kann. Die Reihenfolge der Abfrage ist also beliebig. Das erste Kriterium in Schritt 60 fragt nach der Fahrzeuglängsbeschleunigung a. Ist diese kleiner als beispielsweise -0,15 g, wobei g die Gravitation bezeichnet, so heißt das, daß noch eine signifikante Fahrzeugverzögerung vorliegt. In diesem Falle wird das Austrittskriterium nach Schritt 60 abgebrochen und es erfolgt ein weiterer Durchlauf ab Schritt 20. Ist jedoch die Fahrzeugverzögerung klein genug, also die Fahrzeugbeschleunigung a größer oder gleich -0,15 g, so wird in Schritt 61 abgefragt, ob das Bremslichtschaltersignal zuverlässig ist. Nur dann, wenn der Bremslichtschalter nicht defekt ist, wird das Signal des Bremslichtschalters in Schritt 62 berücksichtigt und für den Fall, daß der Bremslichtschalter ausgeschaltet ist, die elektronische Bremskraftverteilung in Schritt 70 beendet. Sollte ein Defekt des Bremslichtschalters vorliegen oder der Bremslichtschalter eine pedalbetätigte Bremsung anzeigen, so erfolgt ein weiterer Durchlauf ab Schritt 20.

Sollte sich im weiteren Verlauf eine Druckhaltephase oder Druckabbauphase ergeben, so wird wieder mit einem Zähler i = 0 dieser Abfragezyklus begonnen. Wenn die Druckaufbauphase anhält, so werden nur so viele Durchläufe vorgenommen, bis der Zähler i die Zahl n erreicht.

Das vorliegende Beispiel zieht also eine Loop-Zahl zur Zeitmessung heran. Andere geeignete Kriterien zur Zeitmessung sind beispielsweise Ventilschaltpulse oder andere wiederkehrende Ereignisse, die um eine bestimmte Zeit voneinander beabstandet sind. Als geeignete Zeitschwelle zum Ausstieg aus der elektronischen Bremskraftverteilung während einer Druckaufbauphase kann eine Zeit von 7 Sekunden angenommen werden. Wenn bis zu diesem Zeitpunkt keine Druckhalte- oder Druckabbauphase einsetzt, kann davon ausgegangen werden, daß der Fahrer des Fahrzeugs keine stärkere Verzögerung wünscht. In diesem Falle ist es sinnvoll, aus Geräuschdämpfungsgründen oder allgemein zur Vermeidung unnötiger Ventilansteuerungen eine elektronische Bremskraftverteilung abzuschalten.

Die Hinzunahme des Verzögerungskriteriums in Schritt 60 ermöglicht den Austritt aus einer elektronischen Bremskraftverteilung beispielsweise auch dann, wenn der Eintritt unabhängig von einer pedalbetätigten Bremsung aufgrund erhöhten Bremsschlupfes erfolgt ist, beispielsweise durch eine Fahrbahnstörung. Eine derartige Fahrbahnstörung kann nämlich zunächst eine gewisse Fahrzeugverzögerung herbeiführen, die aber nicht auf eine pedalbetätigte Bremsung zurückzuführen ist. In diesem Falle ermöglicht das zusätzliche Kriterium in dem Moment, wo keine signifikante Fahrzeugverzögerung mehr vorliegt, einen Austritt aus der elektronischen Bremskraftverteilung. Aus Sicherheitsgründen erfolgt aber zusätzlich die Abfrage des Bremslichtschaltersignals.

## Patentansprüche

1. Bremsanlage für ein zweiachsiges Fahrzeug mit Mitteln zur elektronischen Bremskraftverteilung (EBV genannt) durch Änderung des Bremsdruckes der Hinterachsbremsen nach Maßgabe einer elektronischen Steuereinrichtung, wobei die elektronische Bremskraftverteilung zumindest zwischen Druckabbauphasen (21) und Druckaufbauphasen (50) unterscheidet, **dadurch gekennzeichnet, daß** die elektronische Bremskraftverteilung nach einer ersten Bedingung (30), die darin besteht, daß eine Druckaufbauphase (50) an den Hinterrädern eine bestimmte Zeit andauert, beendet wird (70).

2. Bremsanlage nach Anspruch 1, **dadurch gekennzeichnet, daß** die elektronische Bremskraftverteilung unter bestimmten Umständen auch nach einer zweiten Bedingung (60) vor Ablauf der bestimmten Zeit abgeschaltet wird, wenn die Fahrzeugbeschleunigung a größer wird als ein bestimmter Wert -k·g, wobei 0 ≤ k < 1 und g = 9,81 m/s².

3. Bremsanlage nach Anspruch 2, **dadurch gekennzeichnet, daß** die Abschaltung nach der zweiten Bedingung (60) nur dann erfolgt, wenn keine vom Fahrer betätigte Bremsung (62) vorliegt.

4. Bremsanlage nach Anspruch 3, **gekennzeichnet durch** eine Bremslichtschalterfehlererkennung (61) und **dadurch**, daß die Abschaltung nach der zweiten Bedingung (60) nur erfolgt, wenn der Bremslichtschalter intakt ist.

## Claims

1. Brake system for a two-axle vehicle with means for the electronic brake force distribution (referred to as EBD) by variation of the braking pressure of the rear-axle brakes on command of an electronic control unit, wherein the electronic brake force distribution makes a distinction at least between pressure reduction phases (21) and pressure increase phases (50),
**characterized in that** the electronic brake force distribution is terminated (70) according to a first condition (30) which involves that a pressure increase phase (50) on the rear wheels lasts for a defined period.

2. Brake system as claimed in claim 1,
**characterized in that** the electronic brake force distribution, under certain circumstances, is also deactivated according to a second condition (60) prior to expiry of the defined period if the vehicle acceleration a exceeds a determined value -k·g, wherein 0 ≤ k < 1 and g = 9.81 m/s².

3. Brake system as claimed in claim 2,
**characterized in that** the deactivation according to the second condition (60) is effected only if there is no pedal-operated brake application (62) by the driver.

4. Brake system as claimed in claim 3,
**characterized by** a brake light switch error detection (61), and in that the deactivation according to the second condition (60) is effected only if the brake light switch is intact.

## Revendications

1. Système de freinage pour un véhicule à deux essieux comportant des moyens de répartition électronique de la force de freinage (désignée par EBV), par variation de la pression de freinage des freins de l'essieu arrière suivant un dispositif électronique de commande, la répartition électronique de la force de freinage faisant la distinction au moins entre des phases de réduction de pression (21) et des phases de montée en pression (50), **caractérisé en ce que** la répartition électronique de la force de freinage est terminée (70) après une première condition (30) selon laquelle une phase de réduction de pression (50) sur les roues arrière dure un temps déterminé.

2. Système de freinage selon la revendication 1, **caractérisé en ce que** dans des circonstances déterminées, la répartition électronique de la force de freinage est terminée même après une deuxième condition (60), avant expiration du temps déterminé, si l'accélération du véhicule (a) est supérieure à une valeur déterminée (-k.g, 0 ≤ k < 1 et g = 9,81 m/s²).

3. Système de freinage selon la revendication 2, **caractérisé en ce que** la coupure après la deuxième condition (60) ne s'effectue que si le conducteur n'a pas activé un freinage (62).

4. Système de freinage selon la revendication 3, **caractérisé par** une reconnaissance de défaut de l'interrupteur des feux de stop (61) et par le fait que la coupure après la deuxième condition (60) ne s'effectue que si l'interrupteur des feux de stop est intact.
